# EUROPEAN PATENT APPLICATION

(11) **EP 4 559 709 A1**
(43) Date of publication of application: **28.05.2025**
(21) Application number: 24213987.1
(22) Date of filing: 19.11.2024
(51) Int. Cl.: B60K 7/00, F16H 57/04, B60K 17/04, F16H 1/46

(54) **MOTORIZED WHEEL HUB AND INDUSTRIAL VEHICLE INCLUDING THE WHEEL HUB**

(30) Priority: 22.11.2023 IT 202300024780
(71) Applicant: IVECO S.P.A., 10156 Torino (IT)
(72) Inventor: AIMO BOOT, Marco, 10156 Turin (IT); SANTARELLI, Livio, 10156 Turin (IT); FRANCIVALDO, Jose, 10156 Turin (IT)
(74) Representative: Fiume, Orazio

(57) **Abstract**

Motorized wheel hub (1) comprising a fixed longitudinal spindle (11) arranged to rotatably support a bell (6) arranged to support at least one vehicle wheel (W1, W2), in which between the spindle (11) and the bell (6) a volume is defined in which an electric motor (2) and a transmission (3) are housed in which the electric motor is arranged axially with respect to the transmission (3).

## Description

### Field of the invention

The present invention relates to the field of motorized wheel hubs and industrial vehicles implementing such wheel hubs.

### State of the art

The implementation of hubs integrating electric motors for vehicle propulsion is known. In the field of industrial vehicles for the road transport of goods and/or people, there are specific requirements to be met.

The propulsion system must be able to express a high torque to move vehicles of significant weight and at the same time must allow to reach speeds compatible with traditional vehicles equipped with internal combustion engines.

Satisfying these requirements is not simple, especially in relation to the fact that the volume available for the installation of the electric motor is limited.

Furthermore, it is necessary to satisfy stringent requirements in terms of driving torque.

Another important aspect is the assembly of the devices which must be simple and safe.

Unless specifically excluded in the detailed description that follows, what is described in this chapter is to be considered as an integral part of the detailed description.

### Summary of the invention

The purpose of the present invention is to insert an electric motor for the vehicular propulsion of a vehicle intended for road transport inside a standard-sized wheel rim.

The basic idea of the present invention is to create a wheel hub comprising a fixed spindle of longitudinal shape along a development axis, rotatably supporting a bell arranged to support at least one rim and in which in a volume defined between the spindle and the bell an electric motor and a transmission are arranged, in which the electric motor is arranged axially with respect to the transmission.

The reciprocal axial arrangement implies that the electric motor is housed next to the transmission, according to the axial direction defined by the spindle.

In operating conditions, the wheel hub defines a first, internal end, intended to be fixed to a vehicular suspension and a second, external end. Preferably, the electric motor is arranged in correspondence with the second end and the transmission is arranged in an intermediate position between the electric motor and the first end of the wheel hub.

Preferably, a brake disc is associated with the spindle, in a proximal position to the first end, so as to be annular and coaxial with the spindle.

Preferably, the transmission comprises a two-stage epicyclic gear train, in which the electric motor is connected to the first stage to drive it in rotation and the second stage is connected to the first stage to drive in rotation the bell on which the at least one vehicle wheel is fixed. A particularity lies in the fact that the second stage of the gear train is located in an intermediate position between the first stage and the electric motor.

This fact, advantageously, allows the bell to be disconnected in the initial stages of disassembly of the hub, without having to completely disassemble the multi-stage epicyclic gear train.

The dependent claims describe preferred variants of the invention, forming an integral part of the present description.

### Brief description of the figures

Further purposes and advantages of the present invention will be clear from the detailed description that follows of an embodiment thereof (and its variants) and from the attached drawings given purely for explanatory and non-limiting purposes, in which:
in figure 1 a diagram of a wheel hub in operating conditions associated with a pair of twin wheels is shown;
in figures 2 - 4 portions of the same exploded view of an embodiment of a wheel hub according to the diagram of figure 1 are shown;
in figures 5 and 6 longitudinal sections perpendicular to each other of an assembled wheel hub are shown, in accordance with figures 2 - 4;
in figures 7 and 8 a portion of a heavy vehicle for the transport of goods and people on public roads is shown, equipped with the wheel hub according to the diagrams of the previous figures.

The same numbers and the same reference letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of the present application as described below.

### Detailed description

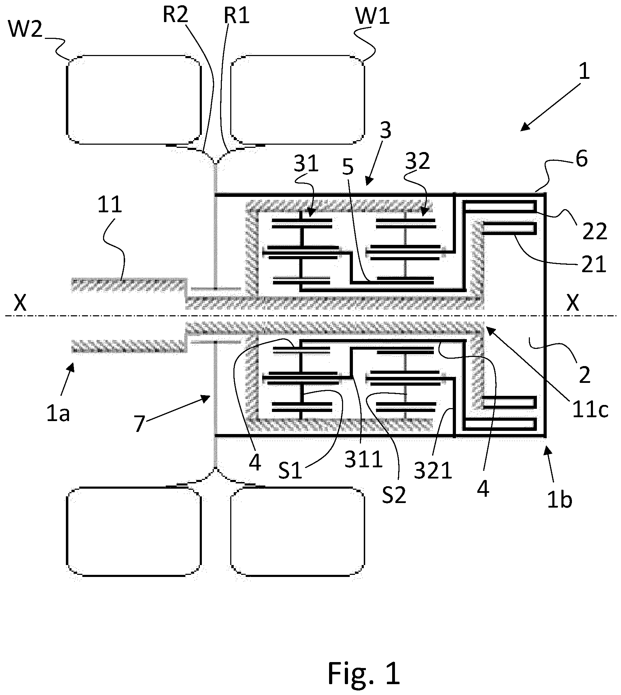

Figure 1 shows a preferred example of the wheel hub 1 according to the present invention. Hereinafter the "wheel hub" is sometimes referred to as the "hub", for convenience.

The hub 1 comprises a fixed spindle 11, of longitudinal shape arranged to rotatably support a bell 6 configured to support at least one vehicular wheel W1, W2.

The wheel, in a manner known in itself, comprises a rim R1, R2 and a tire mounted on the rim.

The spindle and bell assembly has an approximately axial symmetry with respect to the development axis X and in particular an approximately rotational symmetry. The "about" indicates that some fixed portions, associated with the spindle, may have shapes or components that are not symmetrical with respect to the development axis X, such as for example the flange for fixing the spindle to a vehicle suspension (not shown) or to components of lesser importance described below, such as for example electrical connectors, water pipes, etc.

Between the spindle 11 and the bell 6 a preferably closed volume is defined in which an electric motor 2 and a transmission 3 are housed.

The transmission 3 and the electric motor are arranged in a mutually axial position.

The electric motor 2 is preferably radial flow.

In operating conditions, the hub 1 defines a first end 1a, internal, intended to be fixed to a vehicle suspension and a second end 1b, external, opposite to the first.

The first end 1a is defined by the same spindle 11, while the second end 1b is defined by the bell 6.

The spindle therefore comprises a first end coinciding with the first end 1b of the hub and a second end 11c, opposite to the first 1a and arranged approximately in proximity to the second end 1b of the hub, inside the bell.

Preferably, the electric motor is arranged in correspondence with the second end 1b and the transmission is arranged in an intermediate position, in the axial direction, between the electric motor 2 and the first end 1a of the wheel hub.

The electric motor comprises a stator 21, fixed in the second end 1b of the spindle 11 and a rotor 22 arranged annularly in response to the stator.

Advantageously, with this configuration, in consideration of the power required for industrial applications, it is possible to contain the diameter of the hub making it possible to install standard-sized rims.

The transmission 3 comprises a multi-stage epicyclic gear train with at least two stages.

It evidently comprises two satellite cages 311 and 321. The "satellite cages" may also be called "train cages".

The second satellite cage 321, preferably, in the axial direction, is located in an intermediate position between the stator 21 of the electric motor 2 and the first satellite cage 311.

The rotor 22 of the electric motor 2 is configured to transmit motion to the satellites S1 of the first satellite cage 311.

The rotor 22 of the electric motor 2 is configured to transmit motion to the satellites S1 of the first satellite cage 311 by means of the sleeve 4, rotatably supported by the spindle 11, to which a first sun gear is fixed on which the satellites of the first train cage mesh. The rotor 22 comprises an internal annular wall 221 provided with a toothed central hole, designed to engage the toothing 42 of the sleeve 4.

The sleeve 4, therefore, supports or defines the sun gear of the first epicyclic gear train.

The first satellite cage 311 is integral with a toothed ring 5 arranged to define the sun gear of the satellites S2 of the second satellite cage 321.

Therefore, the toothed ring 5 defines the sun gear of the second epicyclic gear train.

The second satellite cage is fixed to the bell 6, to drive it into rotation, consequently, driving into rotation the at least one vehicle wheel W1, W2.

Both the first epicyclic gear train and the second epicyclic gear train are preferably with axes parallel to each other and parallel to the development axis X of the spindle. This fact implies that the couplings between the satellites S1 and the sleeve 4, between the crown 5 and the satellites S2 and between the satellites S1 and S2 and the crown 63 are along planes perpendicular to the development axis X.

Between the transmission 3 and the first end 1a of the hub, a rotating coupling area 7 is identified between the bell 6 and the spindle 1. In this area, bearings are preferably housed.

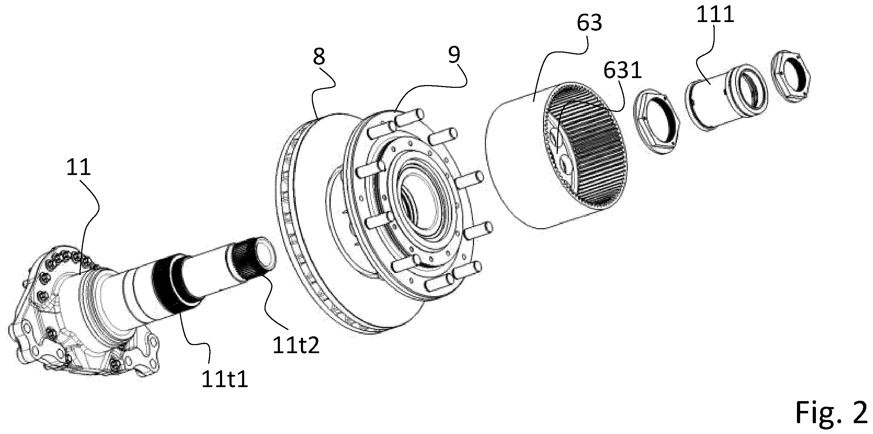

Figures 2 - 4 represent the exploded view of the same embodiment of the hub 1 according to the present invention. The exploded view, divided between the two figures 2, 3 and 4, shows in figure 2 the components closest to the end 1a of the hub 1. Starting from the left of the sheet, we identify
- the spindle 1,
- the brake disc 8,
- the flange 9 for fixing the at least one vehicle wheel W1, W2,
- a fixed crown 63, internally toothed,
- a spacer 111 to keep the support bearings of the sleeve 4 in position.

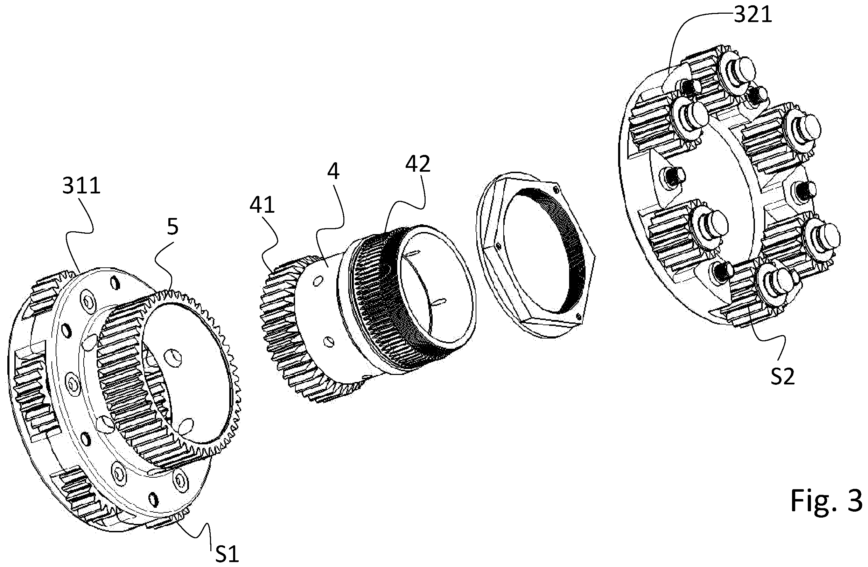

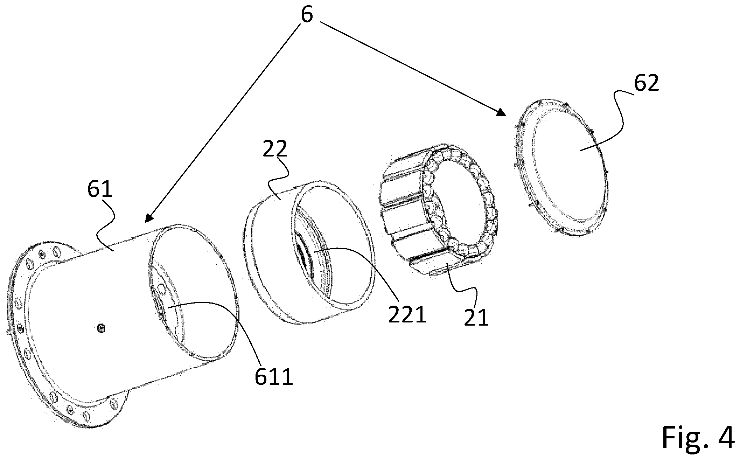

Continuing with figure 3, from the left of the sheet we identify:
- the first satellite cage 311, with the relative satellites S1, in which the first satellite cage is one piece with
- the toothed crown 5, externally toothed, on which mesh
- the satellites S2 of the second satellite cage 321,
- the sleeve 4, comprising a first end 41 equipped with a first external teeth that mesh with the satellites S1 of the first satellite cage 311 and a second end 42, opposite to the first end, equipped with teeth intended to engage the internal teeth of the wall 221 of the rotor 22, visible in figure 4.

Continuing with figure 4, from the left of the sheet we can identify:
- a first portion 61 of the bell 6, substantially cylindrical in shape,
- the rotor 22 of the electric motor 2,
- the stator 21 equipped with the relative coils arranged in an annular manner to form a toroid,
- the second portion 62 of the bell 6, defining a sort of lid in the shape of a flat disk.

With reference to the first portion of the bell, we can see a toroidal wall 611 arranged internally to the same portion and integral with it. This wall is equipped with holes arranged in such a way as to support the rotation shafts of the satellites S2 defining a portion of the second satellite cage.

Therefore, the bell 6 is integral with the second satellite cage 321.

Further details will be clearer from the figures described below.

The first portion 61 of the bell includes a base for fixing it to the flange 9 shown in figure 2.

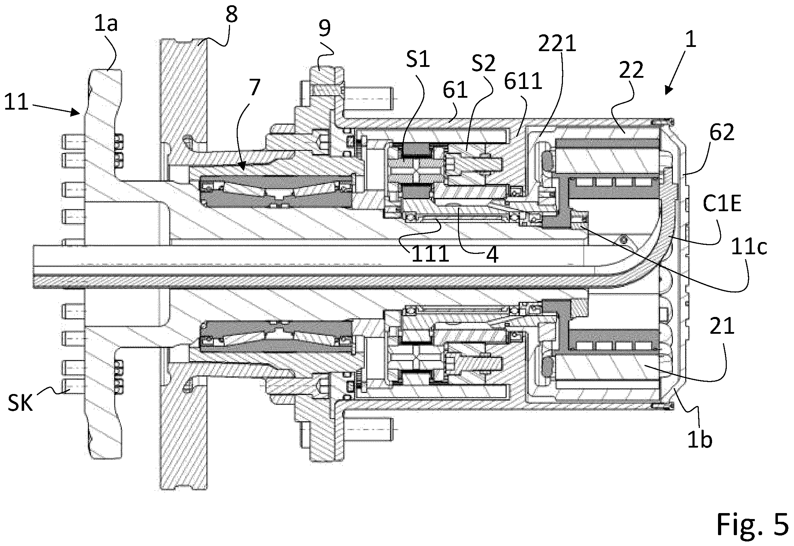

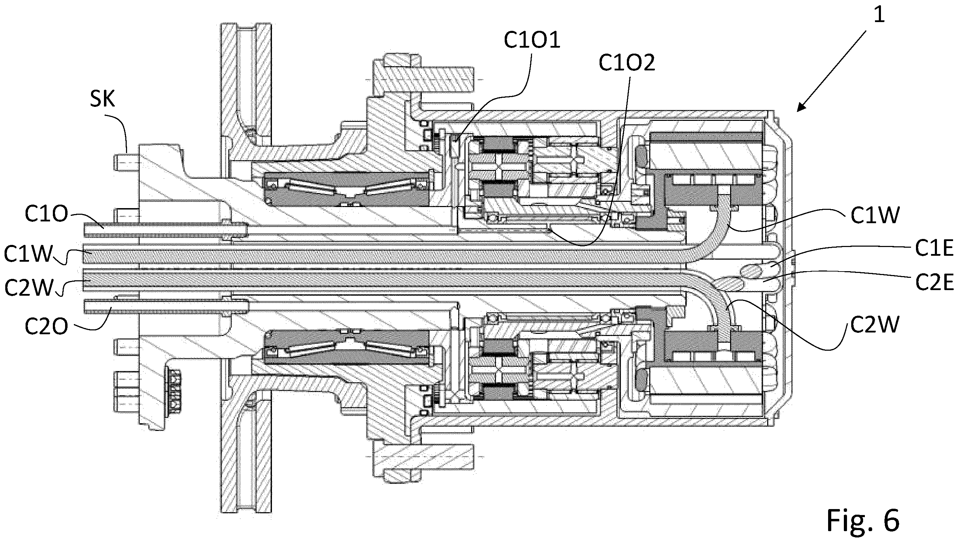

From an examination of the figures, it is clear that the electric motor 2 and the transmission 3 have the same radial extension, allowing the containment of the radial dimensions of the hub in order to be able to implement wheels of standard dimensions for road industrial vehicles. Figures 5 and 6 show longitudinal sections, transverse to each other of the example of a hub according to the previous figures.

From these figures, it is clear that the flange 9 is supported by a system of opposing conical bearings, generically indicated with the sign 7.

The brake disc 8 is fixed to the flange 9 by means of fixing screws accessible in the direction that joins the end 1b to the end 1a. Preferably, the same screws are accessible only by removing the bell 6.

The fixed crown 63 has an internal wall 631 equipped with teeth to engage with a complementary toothing 11t1 obtained on the spindle. This fixed crown 63 forces the satellites S1 of the first satellite cage 311 and also the satellites S2 of the second satellite cage 321 to rotate. Therefore, the same fixed crown 63 has an axial extension such as to collect both the first and the second satellite cage.

The spindle is further equipped with a toothing 11t2 at the end 11c for fixed coupling with the stator 21 of the electric motor 2.

Furthermore, the spindle, at the end 1a is equipped with a flange for connection to the suspension equipped with special fixing screws or pins SK.

The rotor 22 of the electric motor 2 is arranged to rotate the sleeve 4 which meshes with the satellites S1 of the first cage, which cause the first cage to rotate by interacting with the crown 63.

The first cage 311 in turn is of one piece with the crown 5, which meshes with the satellites S2 of the second cage.

These, by interacting with the crown 63, cause the relative satellite carrier cage 321 to rotate, of one piece with the bell 62 which is fixed on the flange 9 arranged to support the at least one vehicle wheel.

The assembly of the hub is preferably carried out by means of three fixing rings, of which the first has the purpose of axially fixing the flange 9 on the spindle, a second has the purpose of axially fixing the sleeve 4 on the spindle and a third has the purpose of fixing the stator on the spindle.

Evidently, there are also sealing gaskets in order to create a hermetically sealed compartment in which the transmission is housed to contain the lubricating oil necessary for the lubrication and cooling of the moving parts.

From figures 5 and 6 it can be seen that the spindle is internally hollow allowing the passage of
- electrical conductors C1E, C2E for the electrical power supply of the electric motor 2,
- hydraulic ducts C1W, C2W for the circulation of a refrigerant fluid for the cooling of the electric motor 2,
- hydraulic ducts C1O, C2O for the circulation of hydraulic oil for the purpose of lubricating and cooling the transmission 3.

As regards the refrigerant fluid circuit, it is preferably made internally to the stator so as not to have to make seals of any kind inside the bell.

As regards the lubricating oil circuit, it is made between the bell 6 and the spindle 1.

For this reason, sealing gaskets can be provided in order to keep the lubricating oil exclusively inside the housing volume of the transmission.

The lubrication of the transmission must be accurate to guarantee the durability of the component.

For example, it is expected that the shafts of the satellites S1, S2 are drilled in order to guarantee adequate lubrication at the interface with the satellites themselves.

A channel C1O1 is arranged inside the wall 631 of the fixed crown 63 to guarantee the lubrication of the seats of the satellite shafts s1 and to allow the lubrication of the teeth of the fixed crown 63 itself.

A further channel C1O2 is made axially to the spindle to conduct hydraulic oil to the interface between the sleeve 4 and the spindle 1. A further channel of hydraulic oil is made in the wall 611 inside the bell to lubricate the seats of the satellite shafts S2.

It should be noted that when the hub of the present invention is combined with a pair of twin wheels, the hub is completely inside the pair of twin wheels, therefore, the axle can be shaped in the form of a lowered saddle allowing the installation of additional vehicle components along the X-axis between the two hubs of the same driving axle.

This allows a lowered load compartment to be guaranteed without loss of performance.

Preferably, the first epicyclic gear of the transmission is able to achieve a transmission ratio of approximately 3.0: 1, while the second epicyclic gear is able to achieve a transmission ratio of approximately 2.7: 1.

The overall transmission ratio is approximately 8.1: 1.

This transmission ratio is conditioned by the dimensions of the wheel hub, which must obviously be entirely contained in a vehicle wheel of an industrial vehicle for transport on public roads.

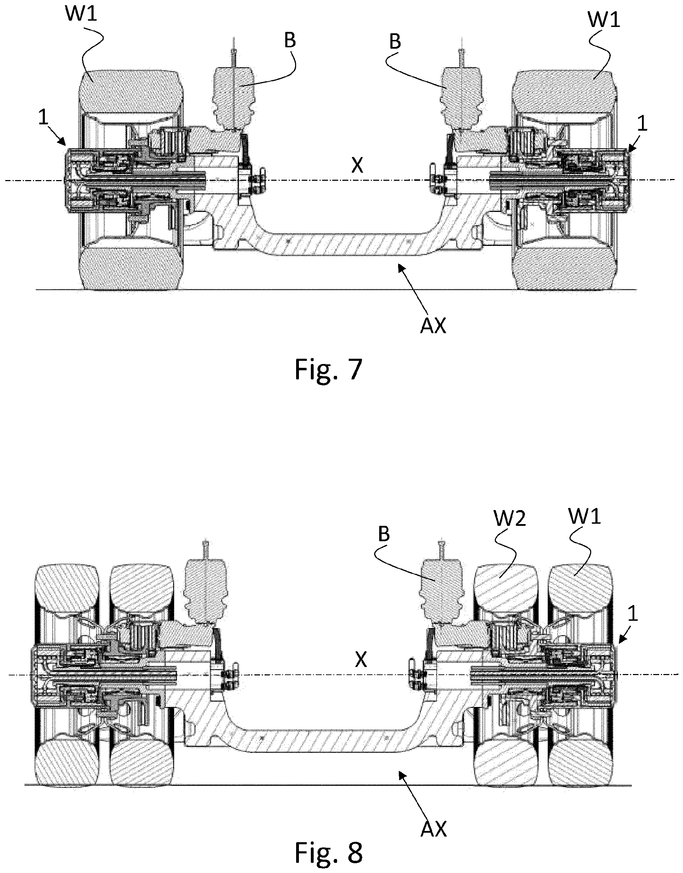

Figures 7 and 8 show portions of two preferred variants of AX axles for industrial vehicles implementing the present invention.

In figure 7, the wheel hub 1 of the present invention is associated with a single vehicle wheel that has a considerable width.

Figure 7 shows a driving axle AX comprising two wheel hubs 1 arranged in a mirror-like manner at opposite ends of the same axle.

It can be easily noted that the central part of the AX axle defines the aforementioned lowered saddle. The AX axle is supported by a pair of suspensions B, for example air.

For this type of vehicle, the rims have approximately an external diameter of 22 - 22.5 inches corresponding to approximately 56cm - 57cm and an internal diameter of approximately 11 inches corresponding to approximately 28 cm.

This last measurement is the one that most limits the sizing of the hub in order to contain the electric motor and the transmission.

Figure 8 differs from Figure 7 only in that rather than a single wheel for each end of the axle, pairs of twinned wheels are installed.

From the comparison it can be noted that the wheel hub protrudes axially moderately from the vehicle wheel W1 in the application of Figure 7, while in the application of Figure 8, the wheel hub is completely contained in the axial extension of the pair of twinned wheels W1, W2.

The solution of Figure 7 is best applied to create a driving and steering axle, typically a front axle.

While, the solution of figure 8 is best applied to create a rear drive axle.

It is worth highlighting that each satellite cage is arranged to support a plurality of satellites. Generally, for a matter of balance of forces, each satellite cage comprises and supports at least three satellites, more preferably six.

It is therefore not possible to obtain a transmission ratio greater than that identified by the present technical solution.

Implementation variants to the non-limiting example described are possible, without however departing from the scope of protection of the present invention, including all the equivalent embodiments for a technician in the field, to the content of the claims.

From the description reported above, the technician in the field is able to create the object of the invention without introducing further construction details.

## Claims

1. Motorized wheel hub (1) comprising a fixed spindle (11) of longitudinal shape defining an axial direction (X) arranged to rotatably support a bell (6) configured to support at least one vehicle wheel (W1, W2), wherein between the spindle (11) and the bell (6) a volume is defined in which an electric motor (2) and a transmission (3) are housed, wherein the electric motor is arranged axially with respect to the transmission (3).

2. Hub according to claim 1, wherein, in operating conditions, the wheel hub (1) comprises a first end (1a), internal, intended to be fixed to a vehicle suspension and a second end (1b), external, opposite to the first and wherein the electric motor is arranged at the second end (1b) and the transmission is arranged in an intermediate position, in the axial direction, between the electric motor (2) and the first end (1a) of the wheel hub.

3. Wheel hub according to claim 1 or 2, wherein the electric motor has a radial extension approximately equal to a radial extension of the transmission.

4. Wheel hub according to any of the preceding claims, wherein the transmission (3) comprises a multi-stage epicyclic gear train comprising a first and a second stage, wherein the first stage is directly connected to the electric motor and the second stage is indirectly connected to the electric motor and is directly connected to the bell (6), and wherein the second stage is interposed, in an axial direction, between the electric motor and the first stage.

5. Hub according to claim 4, wherein the first stage comprises a first satellite cage (311) and the second stage comprises a second satellite cage (321) and wherein the second satellite cage (321), in an axial direction, is operatively in an intermediate position between the electric motor (2) and the first satellite cage (311).

6. Hub according to claim 4 or 5, wherein a rotor (22) of the electric motor (2) is connected to a first sun gear (4) on which the satellites (S1) of the first satellite cage (311) mesh and wherein the first satellite cage is connected to a second sun gear (5) on which the satellites (S2) of the second satellite cage mesh and wherein the second satellite cage is connected directly to the bell (6) .

7. Hub according to claim 6, further comprising a crown (63), internally toothed, fixed with respect to the spindle on which the satellites (S1, S2) of the first and second satellite cage mesh simultaneously.

8. Hub according to any of the preceding claims, wherein the spindle is hollow and in whose cavity are housed at least
- electrical conductors (C1E, C2E) for the electrical power supply of the electric motor (2) and/or
- hydraulic ducts (C1W, C2W) for the circulation of a refrigerant fluid for cooling the electric motor (2) and/or
- hydraulic ducts (C1O, C2O) for the circulation of hydraulic oil for the purpose of lubricating and cooling the transmission (3).

9. Industrial vehicle for the transport of goods and people on public roads comprising a vehicular axle (AX) comprising, at the respective opposite ends, motorized wheel hubs (1) according to any of the preceding claims 1 - 8.
